# EUROPEAN PATENT SPECIFICATION

(11) **EP 3 300 394 B1**
(45) Date of publication and mention of the grant of the patent: **07.07.2021**
(21) Application number: 16190794.4
(22) Date of filing: 27.09.2016
(51) Int. Cl.: H04W 4/50, H04W 12/08, H04W 4/02

(54) **A TRANSCEIVER, A MOBILE COMMUNICATIONS DEVICE, AND A METHOD OF CONTROLLING A TRANSCEIVER**
SENDE-EMPFÄNGER, MOBILKOMMUNIKATIONSVORRICHTUNG UND VERFAHREN ZUR STEUERUNG EINES SENDE-EMPFÄNGERS
ÉMETTEUR-RÉCEPTEUR, DISPOSITIF DE COMMUNICATION MOBILE ET PROCÉDÉ DE CONTRÔLE D'UN ÉMETTEUR-RÉCEPTEUR

(43) Date of publication of application: 28.03.2018
(73) Proprietor: Intel IP Corporation, Santa Clara, CA 95054 (US)
(72) Inventor: MUECK, Markus Dominik, 85579 Neubiberg (DE)
(74) Representative: Viering, Jentschura & Partner mbB Patent- und Rechtsanwälte

(56) References cited:
- EP-A1- 2 563 060
- WO-A1-95/24809
- US-A1- 2015 071 268
- US-A1- 2015 098 393
- None

## Description

### Technical Field

Various embodiments relate generally to a transceiver, a mobile communications device, and a method of controlling a transceiver.

### Background

Wireless radio communications are generally regulated by government entities within a given jurisdiction, with any jurisdiction potentially having varying regulations for wireless radio communications from another jurisdiction. Non-compliance with such regulations may lead to penalties, or other ramifications, for users or wireless radio communication equipment manufacturers. For example, the European Union Directive 2014/52/EU indicates that radio communication equipment shall support certain features in order to ensure that software can only be loaded into the radio equipment where the compliance of the combination of the radio equipment and software has been demonstrated, as discussed in Article 3.3(i). Thus, non-compliant software loaded into radio communication equipment may cause the radio communication equipment to be non-compliant with essential requirements of the Directive. Accordingly, it may be advantageous to have radio communication equipment that controls access to wireless radio communication settings to ensure compliance.
Prior art: EP 2 563 060 Al discloses a method of adapting the parameter set of a mobile terminal based upon its geographical position, US2015/0098393 A1 discloses communicating of user equipment parameters and application settings to a network device, US2015/0071268 A1 discloses adaptation of a mobile device to local regulations and WO 95/24809 A1 discloses providing alternate communication services based on location.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1A shows a mobile communications device in a network.
FIG. 1B shows a schematic of a mobile communications device.
FIG. 1C shows mobile communication devices in geographic locations.
FIG. 2A shows a diagram for remotely approved access.
FIG. 2B shows a system for remotely approved access.
FIG. 3 shows a diagram for expert stakeholder access.
FIG. 4 shows a diagram for open access.
FIG. 5 shows a schematic of a transceiver.
FIG. 6 shows a method of operating a transceiver.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

As used herein, a "circuit" may be understood as any kind of logic (analog or digital) implementing entity, which may be special purpose circuitry or a processor executing software stored in a memory, firmware, hardware, or any combination thereof. Furthermore, a "circuit" may be a hard-wired logic circuit or a programmable logic circuit such as a programmable processor, for example a microprocessor (for example a Complex Instruction Set Computer (CISC) processor or a Reduced Instruction Set Computer (RISC) processor). A "circuit" may also be a processor executing software, for example any kind of computer program, for example a computer program using a virtual machine code such as, for example, Java. Any other kind of implementation of the respective functions which will be described in more detail below may also be understood as a "circuit". It is understood that any two (or more) of the described circuits may be combined into a single circuit with substantially equivalent functionality, and, conversely, that any single described circuit may be distributed into two (or more) separate circuits with substantially equivalent functionality. In particular with respect to the use of "circuitry" in the Claims included herein, the use of "circuit" may be understood as collectively referring to two or more circuits.

A "processing circuit" (or equivalently, "processing circuitry") as used herein, is understood as referring to any circuit that performs an operation(s) on signal(s), such as, e.g., any circuit that performs processing on an electrical signal or an optical signal. A processing circuit may thus refer to any analog or digital circuitry that alters a characteristic or property of an electrical or optical signal, which may include analog data, digital data, or a combination thereof. A processing circuit may thus refer to an analog circuit (explicitly referred to as "analog processing circuit(ry)"), digital circuit (explicitly referred to as "digital processing circuit(ry)"), logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Accordingly, a processing circuit may refer to a circuit that performs processing on an electrical or optical signal as hardware or as software, such as software executed on hardware (e.g., a processor or microprocessor). As utilized herein, "digital processing circuit(ry)" may refer to a circuit implemented using digital logic that performs processing on a signal, e.g., an electrical or optical signal, which may include logic circuit(s), processor(s), scalar processor(s), vector processor(s), microprocessor(s), controller(s), microcontroller(s), Central Processing Unit(s) (CPU), Graphics Processing Unit(s) (GPU), Digital Signal Processor(s) (DSP), Field Programmable Gate Array(s) (FPGA), integrated circuit(s), Application Specific Integrated Circuit(s) (ASIC), or any combination thereof. Furthermore, it is understood that a single processing circuit may be equivalently split into two separate processing circuits, and conversely that two separate processing circuits may be combined into a single equivalent processing circuit.

As used herein, "memory" may be understood as an electrical component in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, it is appreciated that registers, shift registers, processor registers, data buffers, etc., are also embraced herein by the term "memory". It is appreciated that a single component referred to as "memory" or "a memory" may be composed of more than one different type of memory, and thus may refer to a collective component comprising one or more types of memory. It is readily understood that any single memory component may be separate multiple collectively equivalent memory components, and vice versa. Furthermore, it is appreciated that while memory may be depicted, such as in the drawings, as separate from one or more other components, it is understood that memory may be integrated within another component, such as on a common integrated chip.

As used herein, a "cell", in the context of telecommunications, may be understood as a sector served by a base station. Accordingly, a cell may be a set of geographically colocated antennas that correspond to a particular sector of a base station. A base station may thus serve one or more "cells" (or "sectors"), where each cell is characterized by a distinct communication channel. An "inter-cell handover" may be understood as a handover from a first "cell" to a second "cell", where the first "cell" is different from the second "cell". "Inter-cell handovers" may be characterized as either "inter-base station handovers" or "intra-base station handovers". "Inter-base station handovers" may be understood as a handover from a first "cell" to a second "cell", where the first "cell" is provided at a first base station and the second "cell" is provided at a second, different, base station. "Intra-base station handovers" may be understood as a handover from a first "cell" to a second "cell", where the first "cell" is provided at the same base station as the second "cell". A "serving cell" may be understood as a "cell" that a mobile terminal is currently connected to according to the mobile communications protocols of the associated mobile communications network standard. Furthermore, the term "cell" may be utilized to refer to any of a macrocell, microcell, picocell, or femtocell, etc.

The term "base station", used in reference to an access point of a mobile communications network, may be understood as a macro-base station, micro-base station, Node B, evolved Node B (eNodeB, eNB), Home eNodeB, Remote Radio Head (RRH), or relay point, etc.

As used herein, a "cellular radio technology" may operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as 3GPP Generic Access Network, or GAN standard), Zigbee, Bluetooth®, Wireless Gigabit Alliance (WiGig) standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle (V2V) and Vehicle-to-X (V2X) communication technologies, DSRC (Dedicated Short Range Communications) communication systems such as Intelligent-Transport-Systems and others, etc.

As used herein, "a satellite positioning system" (SPS) may include, e.g., Global Positioning System (GPS), Galileo, Global Navigation Satellite System (GLONASS), COMPASS, BeiDou Navigation Satellite System (BDS), as well as other satellite based geolocation and navigation systems.

It is to be noted the ensuing description discusses utilization of the mobile communications device under 3GPP (Third Generation Partnership Project) specifications, notably Long Term Evolution (LTE) and Long Term Evolution-Advanced (LTE-A). Other mobile radio communications systems, however, may be used, where applicable. The examples provided herein can apply to other existing, or other not yet formulated standards, so long as they share the underlying features disclosed in the following examples.

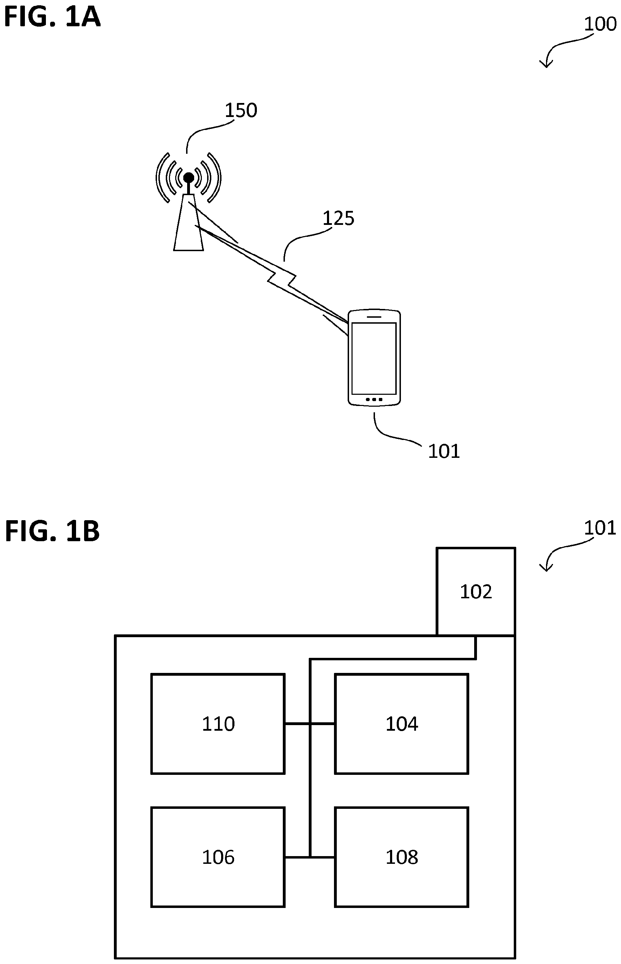

FIG. 1A shows a mobile communications network 100 with a mobile communications device 101 according to an aspect of the disclosure. Mobile communications network 100 may be for a cellular radio technology or a short range radio technology. A mobile communications device 101, e.g., user equipment (UE), may be connected via a first radio connection 125 to a first base station 150. First base station 150 may be a macrocell, femtocell or microcell in part of a network, e.g., an eNodeB for a public land mobile network (PLMN) or may be an access point (AP) of a wireless local area network (WLAN) network, such as WiFi network in accordance with IEEE 802.11 standards.

FIG. IB shows a schematic of a mobile communications device, e.g., mobile communications device 101. In an aspect of the disclosure, mobile communications device 101 may include an antenna 102, a transceiver 110, a processor 104 (e.g., a processing circuit), a memory 106, and a subscriber identity module (SIM) 108.

Antenna 102 may be a single antenna or an antenna array. In addition, antenna 102 may include one or more antennas for differing radio technologies in mobile communications device 101. Transceiver 110 may utilize antenna 102 to transmit and receive wireless signals. Transceiver 110 may include discrete transmitter and receiver circuits or may be combined (e.g., integral) as a transceiver. Transceiver 110 may include or may also be a baseband modem, which may process, e.g., modulate and demodulate information for communication as wireless signals.

Processor 104 may be an application processor, e.g., processor 104 may run an operating system for mobile communications device 101. Accordingly, processor 104 may be configured to support or execute an application, perform memory management, e.g., in conjunction with memory 106, graphics processing, and multimedia decoding. Processor 104 may integrate the baseband modem of the transceiver 110, or the baseband modem may be separate from processor 104.

SIM 108 may be configured to allow mobile communications device 101 to operate on a network, e.g., a PLMN, associated with SIM 108. Mobile communications device 101 may also be a multi-SIM device, for example, having two or more SIMs, with each SIM operating on different networks. Additionally or alternatively, one or more SIMs may operate on the same network.

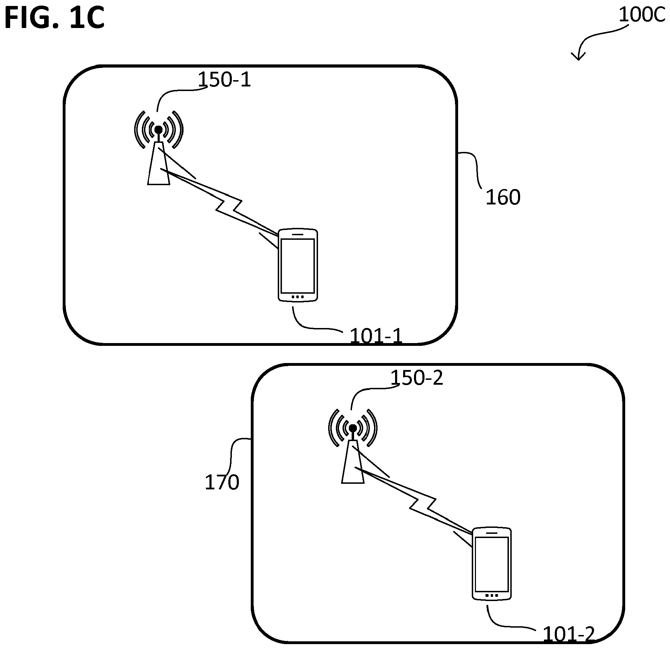

FIG. 1C shows a diagram of mobile communication devices in various geographic locations. Mobile communications device 101-1 may be connected to a base station 150-1 in a geographic location 160, and, likewise, mobile communications device 101-2 may be connected to a base station 150-2 in a geographic location 170. Geographic location 160 and geographic location 170 may be different geographic locations, e.g., two different countries or political states. Geographic location 160 and geographic location 170 may, therefore, have differing regulations on wireless radio communications within the respective jurisdictions. Similarly, at least one of geographic location 160 and geographic location 170 may be a collective of countries with common or overarching regulations of wireless radio communications, e.g., the European Union.

As differing geographic locations may have different regulations for wireless radio communications, it may be advantageous for mobile communications devices, e.g., mobile communications device 101-1 and mobile communications device 101-2, to be configured to adhere to the wireless radio communication regulations of a given geographical location, e.g., a particular jurisdiction for a governing body.

In accordance with the discussion above, a mobile communications device 101 may include a transceiver 110 configured to implement adherence of the mobile communications device 101 to wireless radio communication regulations of a particular geographic location. For example, transceiver 110 may be configured so that wireless radio communications settings cannot be adjusted and are fixed for a particular geographic location. In some instances, however, other approaches may be preferable. For example, a user of a mobile communications device 101 including transceiver 110 may travel from geographic location 160 to geographic location 170, bringing the device along. A transceiver 110 that may adhere to wireless radio communication regulations of geographic location 160 may be in violation of wireless radio communication regulations of geographic location 170. As another example, non-compliance of a transceiver 110 may be allowed in a geographic location for research purposes or other permitted purposes.

Accordingly, transceiver 110 may be adaptable to various situations and geographic locations, as discussed above, while adhering to wireless radio communications regulations within particular geographic locations. Accordingly, transceiver 110 may be configured to control access to wireless radio communication settings (e.g., operational parameters including, for example, a maximum transmission power, at least one frequency band for operation of transceiver 110, and utilization of Dynamic Frequency Selection (DFS)), of the device itself, and thus, potential liability of a manufacturer for wireless radio communications reconfigurations, e.g., by a user or an operating system. Controlling access to the wireless radio communication settings may be effected by introducing levels of configuration parameter openness, e.g., graduated access to operational parameters of transceiver 110, in order to allow reconfiguration of radio equipment, e.g., transceiver 110, some of which may introduce an authorization from the radio equipment manufacturer. Thus, a manufacturer may restrict access to the settings of the radio equipment (for example, to a particular person, real or legal, such as an expert stakeholder), and, thereby, manage liabilities for any malfunctioning of hardware and software combinations.

In an aspect of the disclosure, restricted access to wireless radio communications settings may follow a number of general schemes or modes. Any single mode is not fixed and may incorporate aspects of other modes, as may be discussed below. The modes may generally be described as remotely approved access, expert stakeholder access, and open access, in which access to wireless radio communication settings (operational parameters) may be locked, or unable to be adjusted, without, e.g., authorization or a change of geographic location or an indicator of the geographic location.

Remotely approved access, for example, may involve a manufacturer of a mobile communications device 101 or transceiver 110 allowing a requestor 103 (e.g., a stakeholder, a user, or an operating system, including open source operating systems) to reconfigure radio communication settings upon approval. Thus a manufacturer of a mobile communications device 101 or a transceiver 110, e.g., an entity that may be liable for non-compliance within a geographic location, may be contacted with a request for approval for an adjustment or reconfiguration of an operational parameter of a wireless radio communications device that may be otherwise locked, e.g., deactivation of dynamic frequency selection (DFS), a change of output power levels, etc. In addition to the request, which may be referred to as an authorization access request, context data may accompany the request. For example, the request may include: a device identifier (e.g., a unique transceiver identifier); geographical location data of the device (e.g., via a satellite positioning system, such as the global positioning system (GPS)); and a unique requestor identifier.

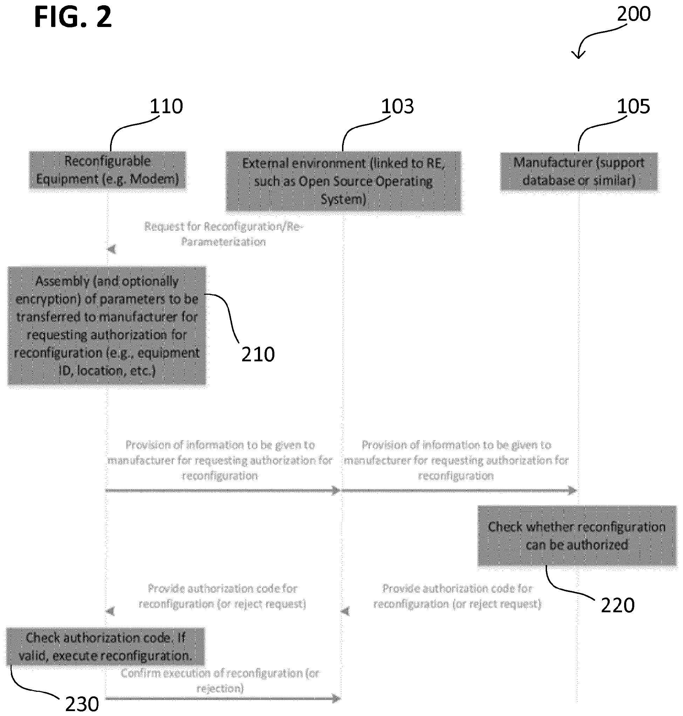

The request may then be analyzed by the manufacturer. If the request is approved, approval may be sent to the device and / or requestor as an authorization access affirmation, e.g., which may include an authorization code to allow adjustment of a particular wireless radio communication setting. Authorization of a request is illustrated as system diagram 200A in FIG. 2A.

In the left column, the transceiver 110 (e.g., a reconfigurable radio equipment, such as a modem) is represented. The center column represents a requestor 103 (e.g., a user or operating system), which may be external to transceiver 103. The right column represents equipment or a device from the manufacturer 105 (e.g., an authorization access determination device configured to authorize an authorization access request).

As shown in FIG. 2A, requestor 103 may attempt to adjust an operational parameter of transceiver 110 or may request to change a parameter of transceiver 110. In block 210, transceiver 110 may provide the authorization access request, which may include at least one of: a unique transceiver 110 identifier; a request to adjust the at least one parameter of the plurality of operational parameters; the current geographical location of transceiver 110 (an estimated geographic location or a determined geographical location); and a key that uniquely identifies requestor 103 for the authorized access. The authorization access request and the contents of the request may optionally be encrypted by transceiver 110. The authorization access request may be communicated via transceiver 110 to manufacturer 105, or via another means, such as to requestor 103, which may relay the authorization access request to manufacturer 105 via transceiver 110 or, for example, via another radio technology or wired communications technology with a network connection, for example, in mobile communications device 101.

In block 220, manufacturer 105 may receive the authorization access request. For example, manufacturer 105 may have an authorization access determination device 201, as shown in diagram 200B of FIG. 2B, which may include a database containing operational parameters of transceiver 110 and the respective allowable states of respective operational parameters in various geographic locations, authorized requestors and keys associated with the requestors, unique transceiver identifiers, etc. In addition, authorization access determination device may include a receiver 202 configured to receive the authorization access request; a processor 204 configured to determine if the authorization access request authorizes the requestor to access (or if the authorization access request should be rejected) and / or adjust the operational parameters of transceiver 110 based on the key; and a transmitter 206 configured to send an authorization access affirmation if the processor determines the key authorizes the requestor access to access and / or adjust the operational parameters of transceiver 110.

In block 230, transceiver 110 may receive the authorization access affirmation, which may include an authorization code that transceiver 110 may use to verify authorization of the request, as well as other information such as an allowable adjustment of an operational parameter of transceiver 110, for example, if the requested adjustment was not allowable for a particular geographic location where transceiver 110 is located. This information may also be communicated with requestor 103.

In another aspect of the disclosure, another mode may be for expert stakeholder access. An expert stakeholder may be an entity that manufacturer 105 may be pre-authorized for access to adjust operational parameters of transceiver 110. An expert stakeholder may also have a contractual agreement with manufacturer 105 to overtake at least some liability in case an adjustment is improper or unlawful based on a reconfiguration of transceiver 110. The expert stakeholder may be provided with a key that uniquely identifies the requestor 103 for the authorized access. The key may include a digital signature (e.g., an algorithm or other mathematically based system for authentication or unique identification), a password, or another unique identifier. The key may be provided to transceiver 110, which may be configured to confirm authorization itself, or may perform the authorization remotely, as discussed above in relation to diagram 200A.

For example, the requestor 103, may contact the manufacturer 103 to obtain a key in order to adjust, e.g., modify, at least one operational parameter of transceiver 110, as well as executing the adjustment of the at least one operational parameter. The key may be included in the authorization access request. Requestor 103 may then receive an authorization access affirmation, which may include an authorization code to access the wireless radio communications settings. The authorization access affirmation may allow access and adjustment of operational parameters of transceiver 110.

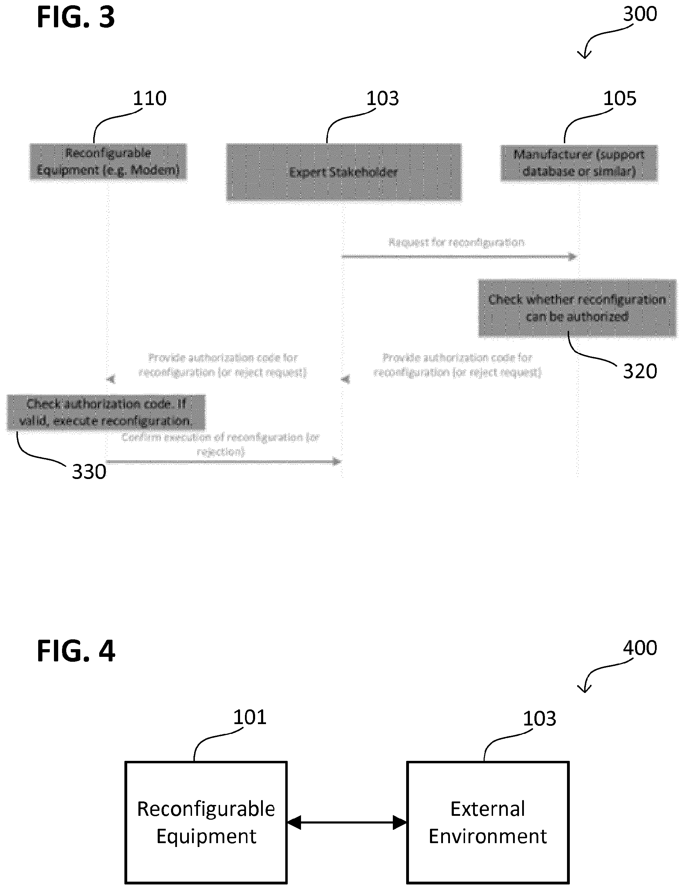

Accordingly, as shown in diagram 300 of FIG. 3, requestor 103 may submit an authorization access request, which, in block 320, may be analyzed by manufacturer 105. If authorization is allowed, manufacturer 105 may provide an authorization access affirmation, which may include an authorization code. Requestor 103 may input the authorization access affirmation into transceiver 110, which may confirm the authorization access affirmation and execute the operational parameter adjustment (or reject the authorization access affirmation if incorrect).

In another aspect of the disclosure, another mode may simply be an open access mode. In this mode, transceiver 110 may simply allow adjustment of all or some operational parameters. As shown in diagram 400 of FIG. 4, a requestor 103 may freely configure the operational parameters of transceiver 110, for example, the operational parameters may be accessible via an open application programming interface (API), e.g., a WLAN driver may freely select a channel within a WLAN band. In this mode, a manufacturer 105 may be liable for any non-compliant operational parameters of the underlying hardware platform, e.g., transceiver 110.

In another aspect of the disclosure, some operational parameters may only be temporarily or locally accessible. For example, if transceiver 110 experiences a problem or error, the operational parameters of transceiver 110 may be locked or fixed so that they may not be adjusted. This may allow time for manufacturer 105 to address the issue. The operational parameters may then be unlocked after a certain period of time or may require an authorization access affirmation from manufacturer 105. Alternatively, an authorization access affirmation may only be valid for a certain period of time, so that after this time period expires, the operational parameters may be fixed.

Additionally or alternatively, an authorization access affirmation may only be valid in a particular geographical location. If the transceiver 110 leaves the geographical location, the authorization access affirmation may be revoked, and a new authorization access request may be required. The authorization access affirmation may include information regarding operational parameters that may be adjusted, which requestors may adjust the operational parameters, and the situation concerning the adjustment, e.g., the geographical location of transceiver 110, as well as other situational factors.

In addition, the above modes and aspects may be integrated. For example, certain operational parameters may be freely adjusted, e.g., in an open access mode, such as WLAN channel selection. Other operational parameters, however, may initially be fixed, and may only be adjusted by an expert stakeholder or by remote approved access. For example, a particular geographic location may be fixed for transceiver 110, an indicator of the particular geographic location may be entered into the transceiver 110. If the transceiver 110 is moved to another geographic location, updating the new location may require authorization, as, for example, one geographic location may have differing regulations from another geographic location (e.g., the European Union and Japan have differing maximum output power levels for WLAN). Certain other operational parameters may be considered highly critical, as they may lead to important liabilities, such as activation or deactivation of DFS. Such parameters may only be accessed by an expert stakeholder.

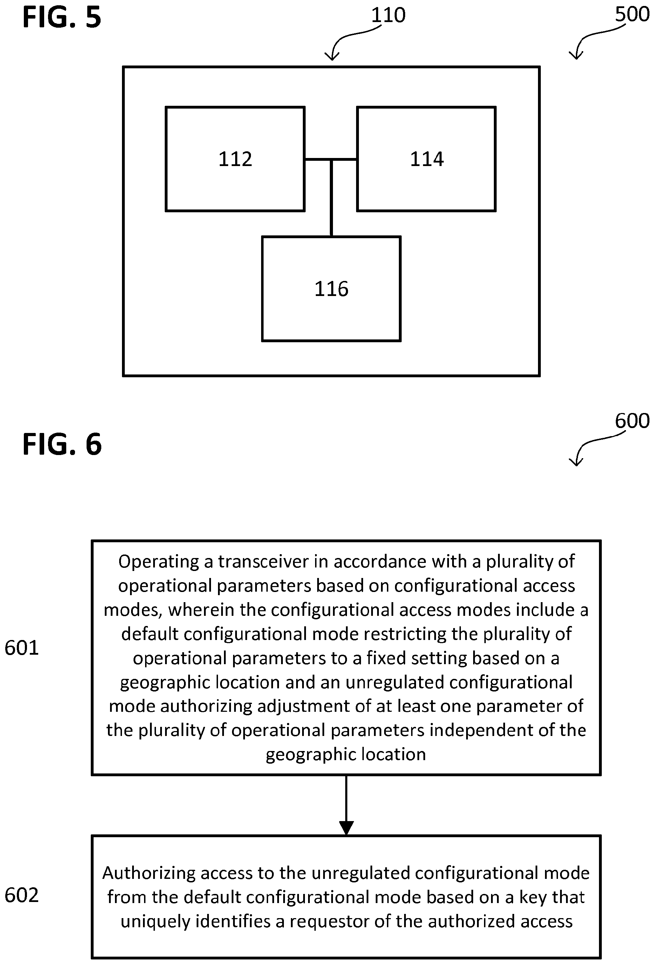

Accordingly, in conjunction with the aspects above, and as shown in schematic 500 in FIG. 5, transceiver 110 may include controller 112 configured to operate the transceiver 110 (i.e., control operation of the functional components, e.g., control an operational circuit that is configured to convert between digital signals and an analog radio signal, e.g., in conjunction with an antenna) in a plurality of configurational access modes based on a plurality of operational parameters, wherein the configurational access modes include: a default configurational mode restricting the plurality of operational parameters to a fixed setting of the plurality of operational parameters based on a geographic location (e.g., limiting selection of output power levels, frequency bands, and frequency bandwidths, i.e., the selections may be limited to a predefined set based on the geographic location) and an unregulated configurational mode authorizing adjustment of at least one parameter of the plurality of operational parameters independent of the geographic location (the unregulated configurational mode may be exclusively offered to experts who may, e.g., adjust output power levels to any settings supported by front-end radio-frequency devices, any available frequency bands, any available frequency bandwidth, etc.); and an authorization component configured to authorize access to the unregulated operational mode from the default operational mode based on a key that uniquely identifies a requestor of the authorized access.

Transceiver 110 may also include a safe mode restricting the plurality of operational parameters to a fixed setting allowed under legal regulations for select geographical locations, i.e., the fixed setting may set the plurality of operational parameters so that they are compliant across multiple geographical locations. Transceiver 110 may additionally include baseband modem 116. Controller 112 may be further configured to control the transceiver 110 to transmit and receive wireless signals (for example, wireless cellular signals, short range wireless signals, and satellite positioning system signals) in accordance with the unregulated configurational mode.

The default restriction mode of controller 112 may be restricted to the plurality of operational parameters allowable under legal regulations defined for the geographic location, and the unregulated configurational mode may authorize the plurality of operational parameters to be configured independent of the legal regulations defined for the geographic location, as the requestor may contract to overtake liability for non-compliance with the legal regulations. As the unregulated operational mode may authorize the at least one operational parameter to be adjusted, the adjustment may include at least one of: setting the at least one operational parameter beyond a maximum predefined threshold as defined by the legal regulations for the geographic location, for example, setting a wireless transmission power beyond a maximum allows wireless transmission power; enabling or disabling a transmission or reception technology defined as not-authorized for use (or must be utilized) by the legal regulations for the geographic location, such as DFS.

In addition, in the default configurational mode, the controller 112 may filter, or oversee, any requests to adjust operational parameters by the device itself. For example, transceiver 110 may attempt to increase the transmission power level of the device (or may be requested to increase the transmission power level, e.g., by a base station) beyond the maximum transmission power level allowed by the legal regulations defined for the geographical location. In this instance, controller 112 may allow the transmission power level of transceiver 110 to be increased, but only to the next best maximum value allowed under the legal regulations of the geographical location (e.g., an increased transmission power level from the current transmission power level that is within the maximum allowable transmission power level defined by applicable legal regulations).

Authorization component 114, which may be a circuit, may be further configured to send an authorization access request, which may be encrypted by authorization component 114, for the authorized access to the unregulated operational mode. The authorization access request may include a unique transceiver 110 identifier, a request to adjust the at least one parameter of the plurality of operational parameters, the geographical location of transceiver 110, and the key. Additionally, authorization component 114 may be configured to receive an authorization access affirmation, which may be encrypted, and authorize access to the unregulated configurational mode in accordance with the authorization access affirmation. Authorization component 114 may be configured to decrypt the authorization access affirmation. In another aspect of the disclosure, authorization component 114 may be further configured to temporarily revoke authorized access to the unregulated configurational mode if an error involving the operational parameters occurs and the controller 112 enters the default configurational mode.

In another aspect of the disclosure, transceiver 110 may be incorporated in a mobile communications device 101. Mobile communications device may include a geographic location determination system configured to determine the geographical location of mobile communications device 101 based on at least one of: a short range radio communication technology, a cellular radio communication technology, and a satellite positioning system. Controller 112 may be further configured to adjust the fixed setting for the default configurational mode based on the geographic location determined by the geographic location determination system.

In an aspect of the disclosure, FIG. 6 may show a method 600 of operating transceiver 110. Method 600 may include: in 601, operating a transceiver in accordance with a plurality of operational parameters based on configurational access modes, wherein the configurational access modes include a default configurational mode restricting the plurality of operational parameters to a fixed setting based on a geographic location and an unregulated configurational mode authorizing adjustment of at least one parameter of the plurality of operational parameters independent of the geographic location; and, in 602, authorizing access to the unregulated configurational mode from the default configurational mode based on a key that uniquely identifies a requestor of the authorized access. Method 600 may further include other steps consistent with the aspects of this disclosure. In addition, method 600 may be implemented by any means consistent with this disclosure that may perform the functions of method 400.

While the invention has been particularly shown and described with reference to specific embodiments, it should be understood by those skilled in the art that various changes in form and detail may be made therein without departing from the scope of the invention as defined by the appended claims. The scope of the invention is thus indicated by the appended claims.

## Claims

1. A transceiver comprising:
a controller configured to operate the transceiver in a plurality of configurational access modes at a current geographic location of the transceiver based on a plurality of operational parameters, wherein the configurational access modes comprise:
a default configurational mode restricting the transceiver to operate with a fixed setting of the plurality of operational parameters for the current geographic location of the transceiver, **characterized in that**
an unregulated configurational mode authorizing a requestor to reconfigure the transceiver by adjusting at least one parameter of the plurality of operational parameters despite the default configurational mode restricting the transceiver for the current geographic location of the transceiver;
an authorization component configured to authorize the transceiver to operate in the unregulated configurational mode.

2. The transceiver according to Claim 1, wherein the authorization component is configured to authorize access of the transceiver to operate in the unregulated configurational mode based on a unique key that identifies the requestor of the authorized access.

3. The transceiver according to Claim 2,
wherein the default configurational mode is restricted to the plurality of operational parameters allowable under legal regulations defined for the geographic location in which the transceiver is operating.

4. The transceiver according to any one of Claims 2 and 3,
wherein the unregulated configurational mode authorizes the plurality of operational parameters to be configured for the transceiver independent of the legal regulations defined for the geographic location of the transceiver.

5. The transceiver according to Claim 4,
wherein the unregulated configurational mode authorizes the at least one operational parameter to be set beyond a maximum predefined threshold as defined by the legal regulations for the geographic location of the transceiver.

6. The transceiver according to any one of Claims 4 and 5,
wherein the unregulated configurational mode authorizes the at least one operational parameter to enable a transmission or reception technology defined as unauthorized for use by the legal regulations in the geographic location of the transceiver.

7. The transceiver according to any one of Claims 2-6,
wherein the controller is further configured to control the transceiver to transmit and receive wireless signals in the unregulated configurational mode.

8. The transceiver according to any one of Claims 2-7,
wherein the operational parameters comprise at least one of: a maximum transmission power and at least one frequency band for operation of the transceiver.

9. The transceiver according to any one of Claims 2-8,
wherein the authorization component is further configured to control the transceiver to send an authorization access request for the authorized access of the transceiver from the default configurational mode to the unregulated configurational mode.

10. The transceiver according to Claim 9,
wherein the authorization access request comprises: a unique transceiver identifier, a request to adjust the at least one parameter of the plurality of operational parameters, the geographical location of the transceiver, and the key.

11. The transceiver according to any one of Claims 2-10,
wherein the authorization component is further configured to receive an authorization access affirmation and authorize access to the unregulated configurational mode in accordance with the authorization access affirmation.

12. A mobile communications device comprising the transceiver according to any one of Claims 1-11.

13. The mobile communications device according to Claim 12, further comprising:
a geographic location determination system configured to determine the geographical location of the mobile communications device.

14. The mobile communications device according to Claim 13,
wherein the geographic location determination system is configured to determine the geographic location of the mobile communications device based on at least one of a short range radio communication technology, a cellular radio communication technology, and a satellite positioning system.

15. The mobile communications device according to any one of Claims 13 and 14,
wherein the controller is further configured to adjust the fixed setting of the plurality of operational parameters for the default configurational mode based on the geographic location of the transceiver as determined by the geographic location determination system.

## Patentansprüche

1. Sende-Empfänger, umfassend:
eine Steuerung, die dazu konfiguriert ist, den Sende-Empfänger in mehreren Konfigurations-Zugriffsmodi an einer aktuellen geografischen Position des Sende-Empfängers basierend auf mehreren Betriebsparametern zu betreiben, wobei die Konfigurations-Zugriffsmodi umfassen:
einen Standardkonfigurationsmodus, der den Sende-Empfänger darauf beschränkt, mit einer festen Einstellung der mehreren Betriebsparameter für die aktuelle geografische Position des Sende-Empfängers zu arbeiten, **dadurch gekennzeichnet, dass**
ein unregulierter Konfigurationsmodus, der es einem Anforderer erlaubt, den Sende-Empfänger durch Anpassen mindestens eines Parameters der mehreren Betriebsparameter neu zu konfigurieren, obwohl der Standardkonfigurationsmodus den Sende-Empfänger auf die aktuelle geografische Position des Sende-Empfängers beschränkt;
eine Autorisierungskomponente, die dazu konfiguriert ist, den Transceiver zu autorisieren, im ungeregelten Konfigurationsmodus zu arbeiten.

2. Sende-/Empfänger nach Anspruch 1, wobei die Autorisierungskomponente dazu konfiguriert ist, den Zugriff des Sende-/Empfängers zu autorisieren, in dem ungeregelten Konfigurationsmodus zu arbeiten, basierend auf einem eindeutigen Schlüssel, der den Anforderer des autorisierten Zugriffs identifiziert.

3. Sende-Empfänger nach Anspruch 2,
wobei der Standardkonfigurationsmodus auf die mehreren Betriebsparameter beschränkt ist, die gemäß den gesetzlichen Bestimmungen zulässig sind, die für die geografische Position definiert sind, an der der Sende-Empfänger betrieben wird.

4. Sende-Empfänger nach einem der Ansprüche 2 und 3,
wobei der unregulierte Konfigurationsmodus die mehreren Betriebsparameter autorisiert, für den Sende-Empfänger unabhängig von den für die geografische Position des Sende-Empfängers definierten gesetzlichen Bestimmungen konfiguriert zu werden.

5. Sende-Empfänger nach Anspruch 4,
wobei der ungeregelte Konfigurationsmodus den mindestens einen Betriebsparameter dazu autorisiert, über einen maximalen vordefinierten Schwellenwert hinaus eingestellt zu werden, wie er durch die gesetzlichen Bestimmungen für die geografische Position des Sende-Empfängers definiert ist.

6. Sende-Empfänger nach einem der Ansprüche 4 und 5,
wobei der unregulierte Konfigurationsmodus den mindestens einen Betriebsparameter autorisiert, eine Übertragungs- oder Empfangstechnologie zu ermöglichen, die durch die gesetzlichen Bestimmungen an der geografischen Position des Sende-Empfängers als für die Verwendung nicht autorisiert definiert ist.

7. Sende-Empfänger nach einem der Ansprüche 2-6,
wobei die Steuerung ferner dazu konfiguriert ist, den Sende-Empfänger zu steuern, um drahtlose Signale im ungeregelten Konfigurationsmodus zu übertragen und zu empfangen.

8. Sende-Empfänger nach einem der Ansprüche 2-7,
wobei die Betriebsparameter umfassen: eine maximale Sendeleistung und/oder mindestens ein Frequenzband für den Betrieb des Sende-Empfängers.

9. Sende-Empfänger nach einem der Ansprüche 2-8,
wobei die Autorisierungskomponente ferner dazu konfiguriert ist, den Sende-Empfänger zu steuern, um eine Autorisierungszugriffsanforderung für den autorisierten Zugriff des Sende-Empfängers von dem Standardkonfigurationsmodus zu dem ungeregelten Konfigurationsmodus zu senden.

10. Sende-Empfänger nach Anspruch 9,
wobei die Autorisierungszugriffsanforderung umfasst: einen eindeutigen Identifikator des Sende-Empfängers, eine Anforderung zum Anpassen des mindestens einen Parameters aus den mehreren Betriebsparametern, die geografische Position des Sende-Empfängers und den Schlüssel.

11. Sende-Empfänger nach einem der Ansprüche 2-10,
wobei die Autorisierungskomponente ferner dazu konfiguriert ist, eine Autorisierungszugriffsbestätigung zu empfangen und den Zugriff auf den unregulierten Konfigurationsmodus gemäß der Autorisierungszugriffsbestätigung zu autorisieren.

12. Mobile Kommunikationsvorrichtung umfassend den Sende-Empfänger nach einem der Ansprüche 1-11.

13. Mobile Kommunikationsvorrichtung nach Anspruch 12, ferner umfassend:
ein System zur Bestimmung der geografischen Position, das dazu konfiguriert ist, die geografische Position der mobilen Kommunikationsvorrichtung zu bestimmen.

14. Mobile Kommunikationsvorrichtung nach Anspruch 13,
wobei das System zur Bestimmung der geografischen Position dazu konfiguriert ist, die geografische Position der mobilen Kommunikationsvorrichtung basierend auf einer Kurzstrecken-Funkkommunikationstechnologie und/oder einer zellularen Funkkommunikationstechnologie und/oder einem Satellitenpositionierungssystem zu bestimmen.

15. Mobile Kommunikationsvorrichtung nach einem der Ansprüche 13 und 14, wobei die Steuerung ferner dazu konfiguriert ist, die feste Einstellung der mehreren Betriebsparameter für den Standardkonfigurationsmodus basierend auf der geografischen Position des Sende-Empfängers, wie sie durch das System zur Bestimmung des geografischen Standorts bestimmt ist, anzupassen.

## Revendications

1. Émetteur-récepteur comprenant :
un dispositif de commande configuré pour utiliser l'émetteur-récepteur dans une pluralité de modes d'accès configurationnels au niveau d'un emplacement géographique actuel de l'émetteur-récepteur basé sur une pluralité de paramètres opérationnels, les modes d'accès configurationnels comprenant :
un mode configurationnel par défaut limitant l'émetteur-récepteur à fonctionner avec un réglage fixe parmi la pluralité des paramètres opérationnels pour l'emplacement géographique actuel de l'émetteur-récepteur, **caractérisé en ce que** :
un mode configurationnel non régulé autorisant un demandeur à reconfigurer l'émetteur-récepteur en réglant au moins un paramètre parmi la pluralité de paramètres opérationnels malgré le fait que le mode configurationnel par défaut limite l'émetteur-récepteur à l'emplacement géographique actuel de l'émetteur-récepteur ;
un composant d'autorisation configuré pour autoriser l'émetteur-récepteur à fonctionner dans le mode configurationnel non régulé.

2. Émetteur-récepteur selon la revendication 1, dans lequel le composant d'autorisation est configuré pour autoriser l'accès de l'émetteur-récepteur à fonctionner dans le mode configurationnel non régulé sur la base d'une clé unique qui identifie le demandeur de l'accès autorisé.

3. Émetteur-récepteur selon la revendication 2, dans lequel le mode configurationnel par défaut est limité à la pluralité de paramètres opérationnels pouvant être autorisés sous des régulations légales définies pour l'emplacement géographique dans lequel l'émetteur-récepteur fonctionne.

4. Émetteur-récepteur selon l'une quelconque des revendications 2 et 3, dans lequel le mode configurationnel non régulé autorise la pluralité de paramètres opérationnels à être configurés pour l'émetteur-récepteur indépendamment des régulations légales définies pour l'emplacement géographique de l'émetteur-récepteur.

5. Émetteur-récepteur selon la revendication 4, dans lequel le mode configurationnel non régulé autorise l'au moins un paramètre opérationnel à être réglé au-delà d'un seuil prédéfini maximum comme défini par les régulations légales pour l'emplacement géographique de l'émetteur-récepteur.

6. Émetteur-récepteur selon l'une quelconque des revendications 4 et 5, dans lequel le mode configurationnel non régulé autorise l'au moins un paramètre opérationnel à activer une technologie de transmission ou de réception définie comme non autorisée à l'utilisation par des régulations légales dans l'emplacement géographique de l'émetteur-récepteur.

7. Émetteur-récepteur selon l'une quelconque des revendications 2 à 6, dans lequel le dispositif de commande est configuré en outre pour commander à l'émetteur-récepteur de transmettre et de recevoir des signaux sans fil dans le mode configurationnel non régulé.

8. Émetteur-récepteur selon l'une quelconque des revendications 2 à 7, dans lequel les paramètres opérationnels comprennent au moins un élément parmi une puissance de transmission maximum et au moins une bande de fréquence pour le fonctionnement de l'émetteur-récepteur.

9. Émetteur-récepteur selon l'une quelconque des revendications 2 à 8, dans lequel le composant d'autorisation est configuré en outre pour commander à l'émetteur-récepteur d'envoyer une demande d'accès d'autorisation pour l'accès autorisé de l'émetteur-récepteur à partir du mode configurationnel par défaut au mode configurationnel non régulé.

10. Émetteur-récepteur selon la revendication 9, dans lequel la demande d'accès d'autorisation comprend : un identifiant d'émetteur-récepteur unique, une demande de régler l'au moins un paramètre parmi la pluralité de paramètres opérationnels, l'emplacement géographique de l'émetteur-récepteur et la clé.

11. Émetteur-récepteur selon l'une quelconque des revendications 2 à 10, dans lequel le composant d'autorisation est configuré en outre pour recevoir une affirmation d'accès d'autorisation et autoriser l'accès au mode configurationnel non régulé en fonction de l'affirmation d'accès d'autorisation.

12. Dispositif de communication mobile comprenant l'émetteur-récepteur selon l'une quelconque des revendications 1 à 11.

13. Dispositif de communication mobile selon la revendication 12, comprenant en outre :
un système de détermination d'emplacement géographique configuré pour déterminer l'emplacement géographique du dispositif de communication mobile.

14. Dispositif de communication mobile selon la revendication 13, dans lequel le système de détermination d'emplacement géographique est configuré pour déterminer l'emplacement géographique du dispositif de communication mobile sur la base au moins d'une technologie de communication radio à courte portée, d'une technologie de communication radio cellulaire et d'un système de positionnement par satellite.

15. Dispositif de communication mobile selon l'une quelconque des revendications 13 et 14, dans lequel le dispositif de commande est configuré en outre pour régler le réglage fixe de la pluralité des paramètres opérationnels pour le mode configurationnel par défaut sur la base de l'emplacement géographique de l'émetteur-récepteur comme déterminé par le système de détermination d'emplacement géographique.
